# EUROPÄISCHE PATENTANMELDUNG

(11) **EP 2 848 341 A1**
(43) Veröffentlichungstag der Anmeldung: **18.03.2015**
(21) Anmeldenummer: 14184465.4
(22) Anmeldetag: 11.09.2014
(51) Int. Cl.: B23B 51/06, B23B 51/04, B23Q 11/00

(54) **Werkzeuganordnung zur Herstellung von Bohrlöchern in Werkstoffen wie Faserverbundwerkstoffen**

(30) Priorität: 13.09.2013 DE 102013110129
(71) Anmelder: Jakob Lach GmbH & Co. KG, 63452 Hanau (DE)
(72) Erfinder: Maurer, Eugen, 61239 Ober-Mörlen (DE)
(74) Vertreter: Stoffregen, Hans-Herbert

(57) **Zusammenfassung**

Die Erfindung bezieht sich auf eine Werkzeuganordnung (10) zur Herstellung von Bohrlöchern (12) in Werkstoffen (14) wie Faserverbundwerkstoffen, umfassend ein spanabhebendes Werkzeug (16) mit einem einen Absaugkanal (18) aufweisenden Bohrerschaft (20) und mit einem zumindest eine Werkzeugschneide (22, 24) aufweisenden Bohrkopf (26), wobei der Bohrkopf (26) zur Bildung eines Zwischenraums (28) zwischen Bohrerschaft (20) und Bohrlochwandung einen größeren Durchmesser D_{BK} als der Bohrerschaft (20) aufweist, sowie eine mit dem Absaugkanal (18) des Bohrerschaftes (20) gekoppelte Absaugeinrichtung (30) zum Absaugen von abgetragenen Spänen durch zumindest eine der zumindest einen Werkzeugschneide (22, 24) zugeordneten Saugöffnung (32, 33) des Bohrkopfs (26) in den Absaugkanal (18). Zur Verbesserung der Spanabsaugung und/oder der Werkzeug- Werkstoff-Kühlung ist vorgesehen, dass Außenwandung (64) des Bohrkopfs (26) zumindest eine sich über gesamte Länge des Bohrkopfs (26) erstreckende und in die zumindest eine Saugöffnung (32, 33) mündende Aussparung (64, 66) als Überströmkanal aufweist, über die eine Verbindung zwischen dem den Bohrerschaft begrenzenden Zwischenraum (28) und der Saugöffnung (32, 33) hergestellt ist.

## Beschreibung

Die Erfindung bezieht sich auf eine Werkzeuganordnung zur Herstellung von Bohrlöchern in Werkstoffen wie Faserverbundwerkstoffen, ein spanabhebendes Werkzeug mit einem einen Absaugkanal aufweisenden Bohrerschaft und mit einem zumindest eine Werkzeugschneide aufweisenden Bohrkopf, wobei der Bohrkopf zur Bildung eines Zwischenraums zwischen Bohrerschaft und Bohrlochwandung einen größeren Durchmesser als der Bohrerschaft aufweist, sowie eine mit dem Absaugkanal des Bohrerschaftes gekoppelte Absaugeinrichtung zum Absaugen von abgetragenen Spänen durch zumindest eine der zumindest einen Werkzeugschneide zugeordneten Saugöffnung des Bohrkopfs in den Absaugkanal.

Eine derartige Vorrichtung ist in der DE 31 43 847 A1 beschrieben. Die bekannte Vorrichtung zum spanenden Bearbeiten, insbesondere Bohren, Fräsen oder Schleifen von Faserverbundwerkstoffen ist gekennzeichnet durch eine Zufuhr von Zuluft an die Bearbeitungsstelle des Werkzeugs von außerhalb der Werkzeugschneiden und einer Abluft-Abfuhr zum Abführen der Zuluft mit angefallenen Spänen als Abluft innerhalb der Werkzeugschneiden. Eine derartige Vorrichtung soll die Werkzeug-Standzeit erhöhen und das Austreten von Spänen, Staub und dergleichen von der Bearbeitungsstelle in die Umgebung verhindern sowie thermische Werkstoffüberlastung unterdrücken, indem die Luft gleichzeitig zur Kühlung des Werkzeugs und des Werkstücks sowie zum Abfördern von Spänen dient.

Bei der bekannten Vorrichtung wird die Zuluft über einen zwischen Bohrerschaft und Bohrlochwandung gebildeten Zwischenraum angesaugt, wobei sich der Zwischenraum umfangsseitig um den gesamten Bohrkopf erstreckt. Folglich wird Zuluft auch in den Bereichen angesaugt, in denen Späne nicht anfallen, bzw. eine Kühlung nicht erforderlich ist, so dass eine effektive Absaugung von Spänen und Kühlung des Werkzeugs bzw. des Werkstücks beeinträchtigt ist.

Davon ausgehend liegt der vorliegenden Erfindung die Aufgabe zu Grunde, eine Werkzeuganordnung der eingangs genannten Art derart weiterzubilden, dass die Spanabsaugung und/oder die Werkzeug- bzw. Werkstück-Kühlung verbessert wird.

Die Aufgabe wird erfindungsgemäß u. a. dadurch gelöst, dass eine Außenwandung des Bohrkopfs zumindest eine sich über gesamte Länge des Bohrkopfs erstreckende und in die zumindest eine Saugöffnung mündende Aussparung als Überströmkanal aufweist, über die eine Verbindung zwischen dem den Bohrerschaft begrenzenden Zwischenraum und der Saugöffnung hergestellt ist.

Die erfindungsgemäße Ausführung zeichnet sich gegenüber dem Stand der Technik dadurch aus, dass die Luftströmung durch den in die Saugöffnung mündenden Überströmkanal gezielt in den Bereich geführt wird, in dem Späne anfallen und eine Werkzeug- bzw. Werkstückkühlung notwendig ist.

Gemäß einer bevorzugten Ausführungsform ist vorgesehen, dass sich die zumindest eine Aussparung, bezogen auf eine von einer Werkzeugschneide definierte Radiallinie, in einem Winkel α im Bereich von 30° ≤ α ≤ 60°, vorzugsweise α = 45° in Drehrichtung des Werkzeugs entlang der Außenwandung erstreckt.

Des Weiteren ist vorgesehen, dass die zumindest eine Aussparung eine Tiefe T aufweist, die einer Verjüngung V zwischen dem Durchmesser D_{BK} des Bohrkopfs und dem Durchmesser D_{BS} des Bohrerschaftes entspricht.

Durch die Dimensionierung der Randerstreckung und Tiefe der Aussparung ist ein Strömungsquerschnitt einstellbar, der einem Strömungsquerschnitt der Saugöffnung des Bohrkopfs entspricht, so dass eine ungehinderte Luftströmung erreicht wird.

Es ist vorgesehen, dass ein erster Längsrand der Aussparung in einer von der Werkzeugschneide aufgespannten Ebene liegt.

Zur weiteren Optimierung der Luftströmung ist vorgesehen, dass ein Mittelpunkt der zumindest einen stirnseitigen Saugöffnung, bezogen auf die von der Werkzeugschneide definierte Radiallinie, in einem Winkel β im Bereich von 15° ≤ β ≤ 45°, vorzugsweise β = 30° in Drehrichtung des Werkzeugs versetzt angeordnet ist.

Gemäß einer bevorzugten Ausführung weist der Bohrkopf mehrere Werkzeugschneiden mit zugeordneten Saugöffnungen auf, wobei jeder Saugöffnung eine Aussparung als Überströmkanal zugeordnet ist.

Eine weitere Ausführungsform zeichnet sich dadurch aus, dass die Seitenwandung des Bohrerschaftes im Bereich der Aussparung eine sich in Richtung der Saugöffnung erstreckende Durchbrechung aufweist, um den Strömungsquerschnitt zu vergrößern.

Auch ist vorgesehen, den Bohrkopf lösbar mit dem Bohrerschaft zu verbinden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine erste Ausführungsform einer Werkzeuganordnung in Form eines Bohrwerkzeugs mit Innenspanabsaugung zur Herstellung eines Bohrlochs in einem Faserverbundwerkstoff, teilweise geschnitten,
- Fig. 2: eine Unteransicht der Werkzeuganordnung,
- Fig. 3: eine Unteransicht einer ersten Ausführungsform eines Bohrwerkzeugs,
- Fig. 4: eine Seitenansicht des Bohrwerkzeugs mit Bohrerschaft und Bohrkopf,
- Fig. 5: eine Seitenansicht des Bohrwerkzeugs gemäß Fig. 4, teilweise geschnitten,
- Fig. 6: eine zweite Ausführungsform eines Bohrwerkzeugs mit Innenspanabsaugung und austauschbarem Bohrkopf,
- Fig. 7: eine Seitenansicht des Bohrwerkzeugs gemäß Fig. 6, teilweise geschnitten.
- Fig. 8: eine Unteransicht des Bohrwerkzeugs gemäß Fig. 6,
- Fig. 9: eine dreidimensionale Explosionsdarstellung eines Bohrerschaftes mit abnehmbarem Bohrkopf,
- Fig. 10: eine zweite Ausführungsform einer Werkzeuganordnung mit Innenspanabsaugung,
- Fig. 11: eine Seitenansicht der Werkzeuganordnung gemäß Fig. 10,
- Fig. 12: eine Unteransicht der Werkzeuganordnung gemäß Fig. 11,
- Fig. 13: eine Schnittdarstellung der Werkzeuganordnung entlang eines Schnittes A-A gemäß Fig. 12 und
- Fig. 14: eine Schnittdarstellung des Bohrkopfs entlang eines Schnittes B-B gemäß Fig. 12.

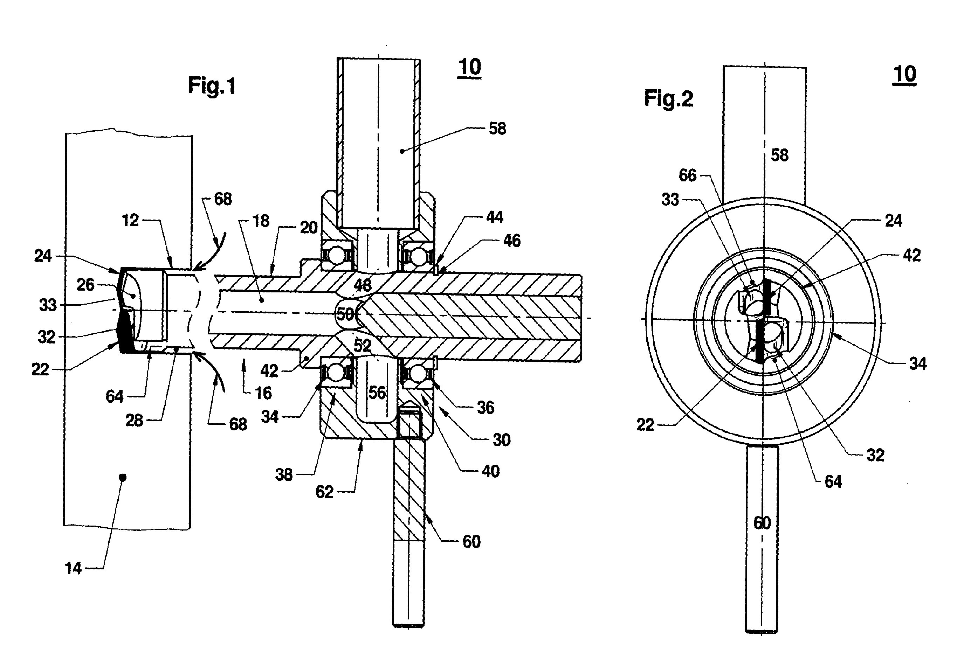

Fig. 1 zeigt eine Werkzeuganordnung 10, teilweise geschnitten, zur Herstellung eines Bohrlochs 12 in einem Werkstoff 14 wie Faserverbundwerkstoff. Die Werkzeuganordnung 10 umfasst ein spanabhebendes Bohrwerkzeug 16 mit einem einen Absaugkanal 18 aufweisenden Bohrerschaft 20 und einem Werkzeugschneiden 22, 24 aufweisenden Bohrkopf 26.

Der Bohrerschaft 20 hat einen Außendurchmesser D_{BS}, der kleiner ist als der Außendurchmesser D_{BK} des Bohrkopfs 26 ist, so dass sich beim Bohren des Bohrlochs 12 ein Zwischenraum 28 zwischen einer Bohrlochwandung und einer Außenfläche des Bohrerschaftes 20 bildet.

Des Weiteren umfasst die Werkzeuganordnung 10 eine mit dem Absaugkanal 18 des Bohrerschaftes 20 strömungstechnisch gekoppelte Absaugeinrichtung 30 zum Absaugen von abgetragenen Spänen (nicht dargestellt) durch mindestens eine Saugöffnung 32 in einer Stirnfläche des Bohrkopfs 26. Die Absaugeinrichtung 30 ist als Absaugring 30 ausgebildet und mittels Kugellager 34, 36 auf einem Abschnitt des Bohrerschaftes gelagert. Die Kugellager 34, 36 sind in Lageraufnahmen 38, 40 des Absaugrings 30 aufgenommen, wobei ein erstes Kugellager 34 gegen einen umlaufenden Flansch 42 des Bohrerschaftes 20 anliegt und wobei der Absaugring 30 mittels eines Springrings 44, der an dem zweiten Kugellager 36 anliegt und in eine Nut 46 in dem Bohrerschaft 20 eingreift, lagefixiert ist.

Der Absaugkanal 18 mündet in Absaugöffnungen 48, 50, 52, 54, die ihrerseits in einen strömungstechnisch gekoppelten Ringspalt 56 des Absaugrings 30 münden, wobei der Ringspalt 56 strömungstechnisch mit einem Absaugrohr 58 zum Absaugen der Späne gekoppelt ist. Zur Drehfixierung des Absaugrings erstreckt sich von dem Absaugring 30 ein Arretierstab 60, der in einer Seitenwandung 62 des Absaugrings 30 befestigt wie verschraubt ist.

Gemäß der Erfindung ist vorgesehen, dass der Bohrkopf 26 in seiner Außenwandung in Längsrichtung des Bohrkopfs 26 verlaufende, in die stirnseitigen Saugöffnungen 32, 33 mündende Aussparungen 64, 66 als Überströmkanäle aufweist, wie dies in Fig. 2 gezeigt ist.

Durch die Überströmkanäle 64, 66 wird erreicht, dass eine durch den Zwischenraum 28 angesaugte Zuluft 68 gezielt an der Werkzeugschneide 22, 24 vorbeigeführt wird, um dort entstehende Späne bzw. Wärme effektiv abzuführen.

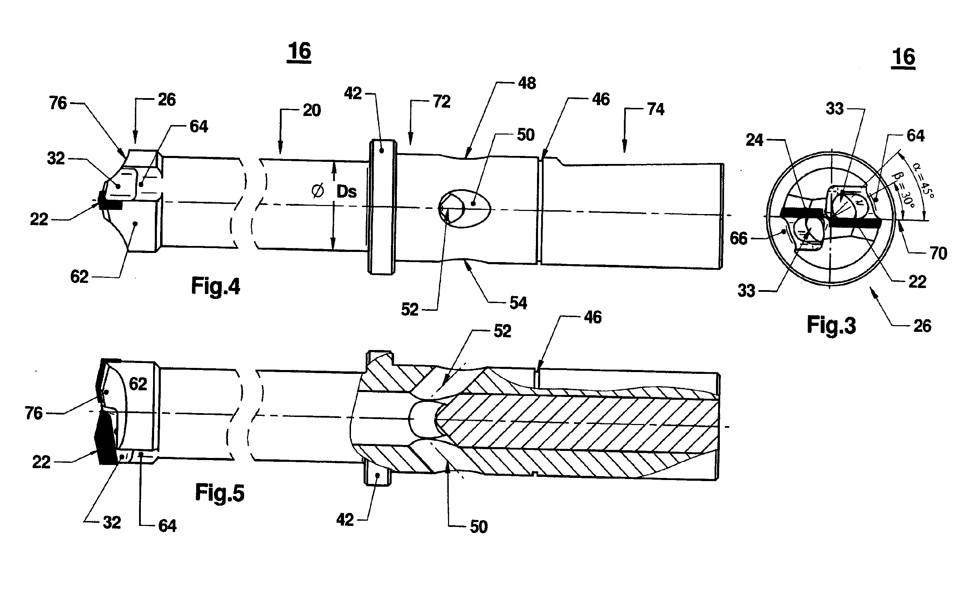

Fig. 3 zeigt eine Unteransicht des Bohrkopfs 26. Die Aussparungen 64, 66 zur Bildung der Überströmkanäle erstrecken sich in einem Winkel entlang des Umfangs, wobei der Winkel α im Bereich von α = 45° liegt. Der Mittelpunkt der Saugöffnung 32 ist in einem Winkel β von etwa 30°, bezogen auf eine von der Werkzeugschneide 22 definierte Radiallinie 70, versetzt angeordnet.

Bei der hier beschriebenen Ausführungsform erstrecken sich die Werkzeugschneiden 22, 24 entlang der Radiallinie 70 und sind in Drehrichtung hinter den Saugöffnungen bzw. Überströmkanälen 64, 66 angeordnet.

Fig. 4 und 5 zeigen Seitenansichten des Bohrwerkzeugs 16 mit Bohrerschaft 20, Bohrkopf 26, Absaugringaufnahme 72 und Einspannfutter 74. Die Saugöffnungen 32, 33 erstrecken sich teilweise in der Seitenwandung des Bohrkopfs 26 und münden in den Überströmkanal 64, 66. In die umlaufende Außenwandung 62 des Bohrkopfs ist ein Hinterschnitt 76 eingeformt ist, der einen mit der Saugöffnung gekoppelten Spanraum bildet.

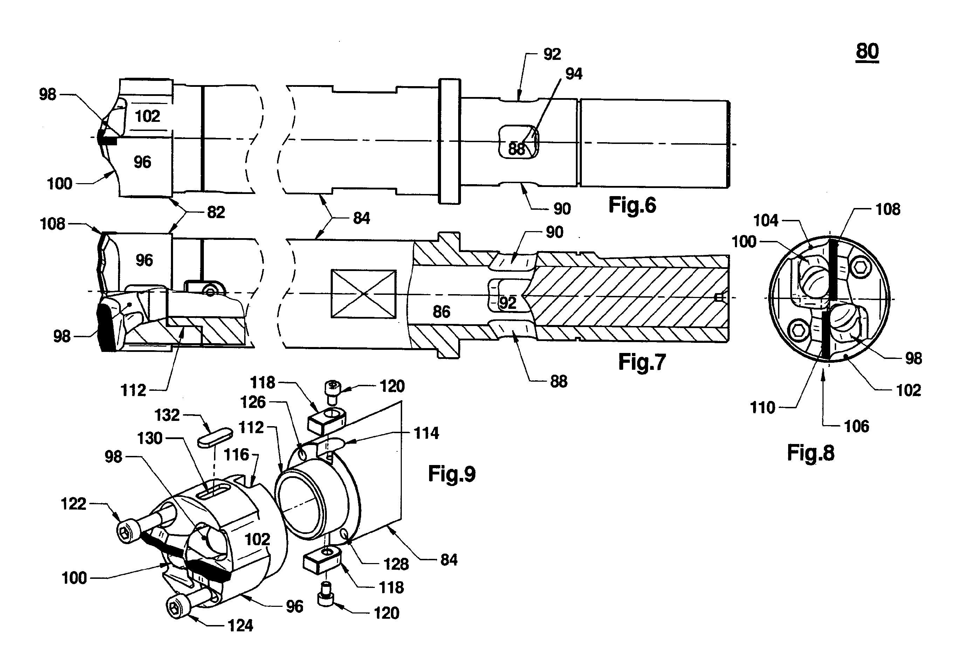

Die Fig. 6 bis 9 zeigen eine alternative Ausführungsform eines Bohrwerkzeugs 80 mit abnehmbarem Bohrkopf 82. Das Bohrwerkzeug 80 umfasst einen Bohrerschaft 84 mit einem Absaugkanal 86 oder in wandseitige Strömungsöffnungen 88, 90, 92, 94 mündet, um Abluft in dem Ringspalt 56 des Absaugrings 30 absaugen zu können.

Der Bohrkopf 82 weist eine Außenwandung 96 auf, die im Bereich von stirnseitigen Saugöffnungen 98, 100 jeweils Überströmkanäle bildende Aussparungen 102, 104 aufweist, welche in die Saugöffnungen 98, 100 münden. Entlang einer Diagonalen 106 sind Werkzeugschneiden 108, 110 angeordnet, wobei die Saugöffnungen 98, 100 in Drehrichtung vor den Werkzeugschneiden 104, 106 angeordnet sind.

Zur Verbindung des Bohrkopfs 82 mit dem Bohrerschaft 84 weist dieser stirnseitig einen zylinderförmigen Hohlstumpf 112 auf, der einen kleineren Durchmesser als der Bohrerschaft aufweist und auf den Bohrkopf 82 aufsteckbar ist. Ferner sind im Bereich der Schnittstelle zwischen Bohrerschaft 84 und Bohrkopf 82 sich in Längsrichtung erstreckende und miteinander korrespondierende Aussparungen 114, 116 vorgesehen, in welche ein Mitnehmerkeil 118 zur Fixierung des Bohrkopfs 82 einlegbar und mittels eines Befestigungselementes 120 wie Schraube gegen Verdrehen fixierbar ist.

Des Weiteren erfolgt eine Fixierung über Befestigungselemente 122, 124 wie Schrauben, die sich durch den Außenrandabschnitt 96 des Bohrkopfs in axialer Richtung erstrecken und in Gewindebohrungen 126, 128 in der Wandung des Bohrerschaftes 84 eingreifen.

Ferner ist vorgesehen, dass in dem Außenwandabschnitt 96 Aussparungen 130 in Längsrichtung eingebracht sind, in welche Stützleisten 132 aufnehmbar sind, um eine Abstützung der Außenwand 96 gegenüber der Innenwand des Bohrlochs zu erreichen.

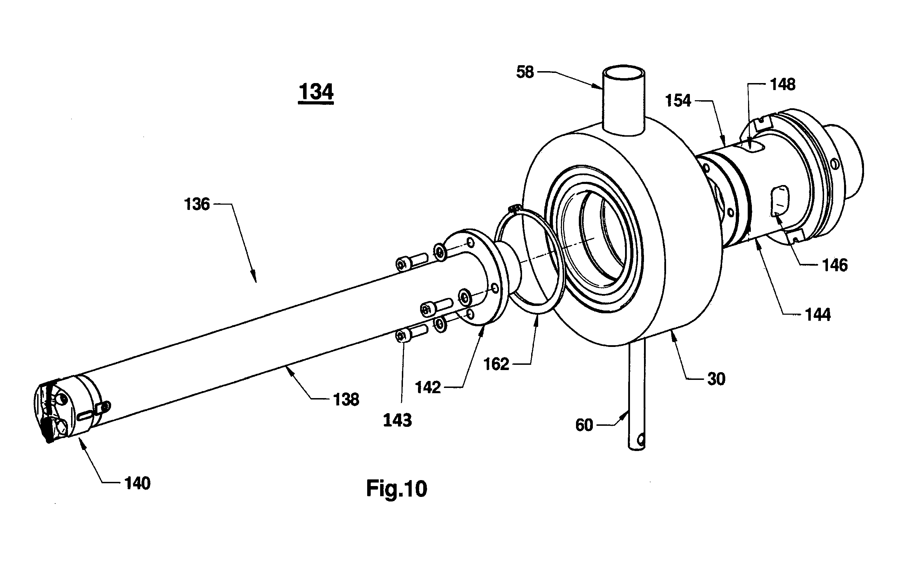

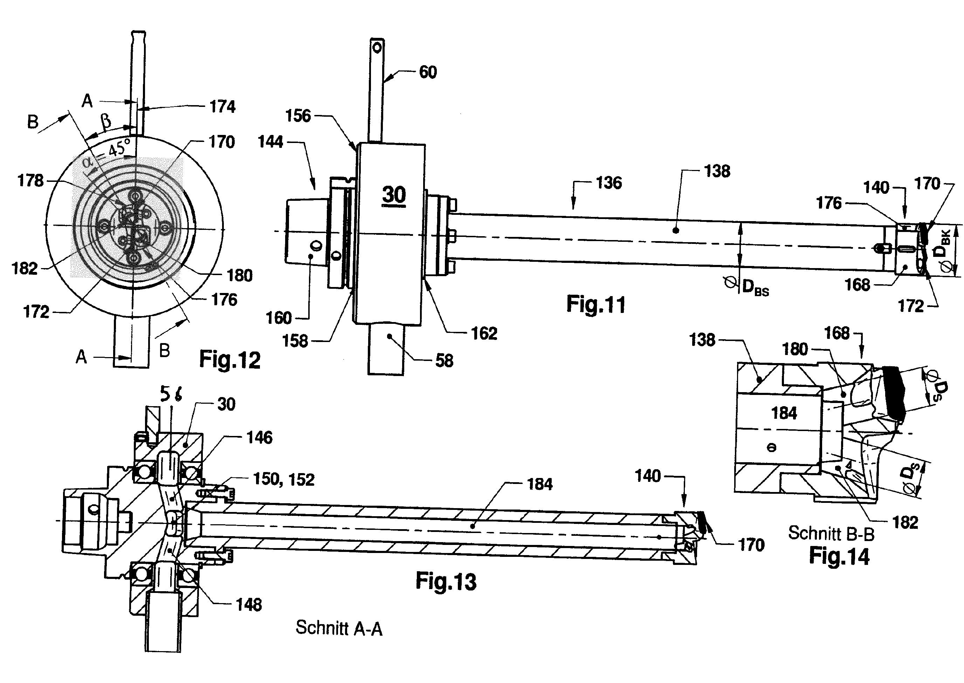

Die Fig. 10 bis 14 zeigen in verschiedenen Ansichten eine eigenerfinderische Ausführungsform einer Werkzeuganordnung 134 mit Innenspanabsaugung zur Herstellung von Bohrlöchern in Faserverbundwerkstoffen. Die Werkzeuganordnung 134 umfasst ein Bohrwerkzeug 136 mit einem Bohrerschaft 138 und einem Bohrkopf 140, der in seiner Ausführung dem austauschbaren Bohrkopf 82 entspricht. Der Bohrerschaft 138 ist über einen Flansch 142 und Befestigungsmittel 143 mit einem Zwischenadapter 144 verbunden. In dem Zwischenadapter sind Absaugöffnungen 146, 148, 150, 152 in Seitenwandung 154 vorgesehen, die strömungstechnisch mit dem Absaugring 30 zusammenwirken, der denselben Aufbau aufweist, wie dieser mit Bezug zu Fig. 1 beschrieben wurde. Im zusammengesetzten Zustand, wie in Fig. 11 dargestellt ist, liegt der Absaugring 30 mit einer Stirnseite 156 an einem Anschlag 158 des Zwischenadapters 144 an. Der Zwischenadapter ist mit einem Ansatzstück 160 an eine Antriebseinrichtung koppelbar. Des Weiteren ist der Absaugring 30 über einen Sprengring 162 fixiert, der in eine Nut 164 des Zwischenadapters 144 eingreift.

Fig. 11 zeigt eine Seitenansicht der Werkzeuganordnung 134. Der Durchmesser D_{BK} des Bohrkopfs 140 ist größer als der Durchmesser D_{BS} des Bohrerschaftes 138. Vorzugsweise kann der Durchmesser D_{BK} des Bohrkopfs 59 mm betragen, während der Durchmesser D_{BS} des Bohrerschaftes 50 mm betragen kann.

Entsprechend der erfindungsgemäßen Ausführungsform der bereits beschriebenen Bohrköpfe 26 und 82 weist auch der Bohrkopf 140 eine Außenwandung 168 auf, die den Durchmesser D_{BK} des Bohrkopfs 140 bestimmt. Stirnseitig weist der Bohrkopf Werkzeugschneiden 170, 172 auf, die sich entlang einer Radiallinie 174 diagonal erstrecken. In die Außenwandung 168 sind in Längsrichtung Aussparungen 176, 178 als Überströmkanäle eingeformt, die in Saugöffnungen 180, 182 münden. Die Aussparungen 176, 178 erstrecken sich entlang des Umfangs in einem Winkel α, ausgehend von der Diagonallinie 174, wobei der Winkel α etwa 45° beträgt. Die Mittelpunkte der Saugöffnungen 180, 182 sind bezogen auf die Radiallinie 174 in Drehrichtung des Bohrwerkzeugs in einem Winkel β von etwa 30° angeordnet.

Fig. 13 zeigt eine Schnittdarstellung der Werkzeuganordnung 134. Der Bohrerschaft 138 weist einen Absaugkanal 184 auf, der die Saugöffnungen 180, 182 mit den in dem Zwischenadapter angeordneten Absaugöffnungen 146, 148, 150, 152 koppelt, die in den Absaugring 56 münden.

Fig. 14 zeigt eine Schnittdarstellung des Bohrkopfs 140, in welcher die Saugöffnungen 180, 182 dargestellt sind, die in den Absaugkanal 184 münden. Die Saugöffnungen 180, 182 weisen einen Durchmesser D_{S} auf, der im Bereich von ca. 15 mm liegt, bei einem Bohrkopfdurchmesser B_{BK} von ca. 59 mm.

## Patentansprüche

1. Werkzeuganordnung (10) zur Herstellung von Bohrlöchern (12) in Werkstoffen (14) wie Faserverbundwerkstoffen, umfassend ein spanabhebendes Werkzeug (16; 80) mit einem einen Absaugkanal (18; 86) aufweisenden Bohrerschaft (20; 84) und mit einem zumindest eine Werkzeugschneide (22, 24; 108, 110) aufweisenden Bohrkopf (26; 82), wobei der Bohrkopf (26; 82) zur Bildung eines Zwischenraums (28) zwischen Bohrerschaft (20, 84) und Bohrlochwandung einen größeren Durchmesser D_{BK} als der Bohrerschaft (20; 84) aufweist, sowie eine mit dem Absaugkanal (18; 86) des Bohrerschaftes (20; 84) gekoppelte Absaugeinrichtung (30) zum Absaugen von abgetragenen Spänen durch zumindest eine der zumindest einen Werkzeugschneide (22, 24; 108, 110) zugeordneten Saugöffnung (32, 33; 98,100) des Bohrkopfs (26; 82) in den Absaugkanal (18; 86),
**dadurch gekennzeichnet ,**
**dass** Außenwandung (64; 96) des Bohrkopfs (26; 82) zumindest eine sich über gesamte Länge des Bohrkopfs (26; 82) erstreckende und in die zumindest eine Saugöffnung (32, 33; 98, 100) mündende Aussparung (64, 66; 102, 104) als Überströmkanal aufweist, über die eine Verbindung zwischen dem den Bohrerschaft begrenzenden Zwischenraum (28) und der Saugöffnung (32, 33; 98, 130) hergestellt ist.

2. Werkzeuganordnung nach Anspruch 1,
**dadurch gekennzeichnet ,**
**dass** sich die zumindest eine Aussparung (64, 66; 102, 104) bezogen auf eine von einer Werkzeugschneide (22, 24; 108, 110) definierte Radiallinie in einem Winkel α im Bereich von 30° ≤ α ≤ 60°, vorzugsweise α = 45° in Drehrichtung des Werkzeugs (20, 80) entlang der Außenwandung (62; 96) erstrecken.

3. Werkzeuganordnung nach Anspruch 1 oder 2,
**dadurch gekennzeichnet,**
**dass** die zumindest eine Aussparung (64, 66; 102, 104) eine Tiefe T aufweist, die einer Verjüngung V zwischen dem Durchmesser D_{BK} des Bohrkopfs (26; 82) und dem Durchmesser D_{BS} des Bohrerschaftes (20; 84) entspricht.

4. Werkzeuganordnung nach zumindest einem der vorhergehenden Ansprüche,
**dadurch gekennzeichnet ,**
**dass** ein Mittelpunkt der zumindest einen stirnseitigen Saugöffnung (32, 33; 98, 120) - bezogen auf eine von der Werkzeugschneide (22, 24; 108, 110) definierten Radiallinie (70) in einem Winkel β im Bereich von 15° ≤ β ≤ 45°, vorzugsweise β = 30° in Drehrichtung des Werkzeugs versetzt angeordnet ist.

5. Werkzeuganordnung nach zumindest einem der vorhergehenden Ansprüche,
**dadurch gekennzeichnet ,**
**dass** die die Aussparung (64, 66; 102, 104) projiziert auf eine rechtwinklig zu der zumindest einen Werkzeugschneide (22, 24; 108, 110) verlaufende Diagonale eine lichte Weite W aufweist, die größer oder gleich einem Durchmesser D_{S} der Saugöffnung ist.

6. Werkzeuganordnung nach zumindest einem der vorhergehenden Ansprüche,
**dadurch gekennzeichnet ,**
**dass** der Bohrkopf (26; 82) mehrere Werkzeugschneiden (22, 24; 108, 110) mit zugeordneten Saugöffnungen (32, 33; 108, 110) aufweist, wobei jeder Saugöffnung (22, 33; 108, 110) eine Aussparung (64, 66; 102, 104) als Überströmkanal zugeordnet ist.

7. Werkzeuganordnung nach zumindest einem der vorhergehenden Ansprüche,
**dadurch gekennzeichnet ,**
**dass** der Bohrkopf (82; 140) lösbar mit dem Bohrerschaft (20; 84) verbunden ist.
